# EUROPEAN PATENT SPECIFICATION

(11) **EP 3 631 216 B1**
(45) Date of publication and mention of the grant of the patent: **06.07.2022**
(21) Application number: 18810683.5
(22) Date of filing: 29.05.2018
(51) Int. Cl.: F16B 12/22, F16B 12/42

(54) **SYSTEM COMPRISING A FIRST AND SECOND FURNITURE PART AND A LOCKING ARRANGEMENT, AND USE OF THE SYSTEM**
SYSTEM MIT EINEM ERSTEN UND ZWEITEN MÖBELTEIL UND EINER VERRIEGELUNGSANORDNUNG SOWIE VERWENDUNG DES SYSTEMS
SYSTÈME COMPRENANT UNE PREMIÈRE ET UNE SECONDE PARTIE DE MEUBLE ET UN AGENCEMENT DE VERROUILLAGE, ET SON UTILISATION

(30) Priority: 29.05.2017 SE 1750667
(43) Date of publication of application: 08.04.2020
(73) Proprietor: Inter IKEA Systems B.V., 2616 Delft (NL)
(72) Inventor: BRENDEL, Stefan, 285 34 Markaryd (SE); SCHÖN, Daniel, 355 96 Kalvsvik (SE); NORTHFELL, Johan, 374 30 Karlshamn (SE); ERIKSSON, Joel, 352 43 Växjö (SE); FORS, Mikael, 312 60 Mellbystrand (SE)
(74) Representative: Ström & Gulliksson AB
(86) International application number: PCT/SE2018/050534
(87) International publication number: WO 2018/222114

(56) References cited:
- WO-A1-2016/137385
- GB-A- 2 428 078
- GB-A- 2 428 078
- US-A- 3 303 937
- US-A1- 2004 195 122
- US-A1- 2013 239 509
- US-A1- 2013 239 509
- US-A1- 2014 034 593
- US-A1- 2014 205 373

## Description

### Technical field

The invention refers to a system comprising a first and a second furniture part and a locking arrangement. Also, the invention refers to the use of such system.

### Technical background

It is well known in the art to provide furniture or furniture parts which are provided to the end consumer as a flat package and where the end consumer herself performs the assembling. Although the connecting members and brackets to a large extent may be standardized in terms of the tooling that is required, it still causes problems to the end consumer since most brackets require connecting means such as screws which are small and easily lost.

One locking principle that is known for mounting furniture parts without tooling uses a dowel that is inserted into a recess having an insertion portion and a locking portion, where the dowel is inserted along the depth-direction of the recess and then moved towards the locking portion in a direction transverse the depth-direction. In case of the furniture parts to be interconnected are panels, the recess may in some cases be covered and hidden by the edge portion of one of the panels. However, in a furniture where at least one of the furniture parts has a narrow cross section, such as a tube, the cross section may be too small to cover and hide the insertion portion. A visible insertion portion may in some circumstances be unwanted as seen from an aesthetical perspective. Also, a two-directional movement to achieve the locking function allows an easy dis-mounting, simply by reversing the movements. However, in some circumstances dis-mounting should be avoided or at least be intentional to prevent accidents and injuries. Similar systems for interlocking furniture parts are for example known from GB 2 428 078 A and US 2013/239509 A1.

There is accordingly a need for a furniture system with a locking arrangement that is easy to mount without the need for any tooling and which provides a locking function safeguarding unintentional dis-mounting.

### Summary

One object of the invention is to provide a furniture system with a locking arrangement that allows an easy mounting without any need for tooling.

A second object is to provide a furniture system with a locking arrangement that has an integrated locking function that prevents unintentional dismounting.

Another object is to provide a furniture system with a locking arrangement that covers and visually hides the insertion portion.

Yet another object is to provide a furniture system with a locking arrangement configured to connect a first and a second furniture where at least one of the furniture parts is an extruded tube or a post.

These and other objects are solved by a system comprising a first furniture part, a second furniture part and a locking arrangement, the first furniture part comprising a recess having a depth and having, transversely to the depth, an oblong shape and an insertion portion and a locking portion, wherein the locking portion along an inner wall thereof comprises a groove; the second furniture part comprising a wall portion having an extension along a longitudinal direction, and the locking arrangement comprising: a protrusion forming part of or being attachable to the second furniture part, and having an extension along the longitudinal direction towards a free end of the protrusion, and comprising a rim extending transverse the longitudinal direction and along at least a part of the protrusion's circumference; and a locking plug configured to be lockingly inserted into the insertion portion in a condition when the protrusion has been inserted into the insertion portion and has been transferred to the locking portion, wherein the locking plug at least partly occupies the insertion portion and thereby counteracts transferring of the protrusion towards the insertion portion, and wherein the locking plug comprises a friction surface extending along the longitudinal direction, said friction surface being configured to lockingly or wedgingly abut a guiding surface of the protrusion in a condition when the locking plug has been inserted into the insertion portion.

By the present invention, a locking arrangement is provided that is fully manually operable and which provides a robust and durable connection between the first and the second furniture parts. The locking arrangement can be used no matter type of material in the first or second furniture parts.

When the locking plug has been fully inserted, the two furniture parts are firmly held together while preventing un-intentional or accidental release. Further, an aesthetical joint is provided for, since the locking plug when fully inserted into the insertion portion at least partly occupies and thereby conceals the mouth of the insertion portion. This is of special interest in the case of the second furniture part having a limited cross section which in itself cannot cover the insertion portion.

The second furniture part may comprise a groove having an extension along the longitudinal direction; wherein the locking plug comprises a guiding portion configured to interact with the groove thereby providing guiding of the locking plug during insertion of the locking plug into the insertion portion.

The locking arrangement with its protrusion and slidable locking plug is intuitively operated by linear movements in two directions of the two furniture parts, followed by a sliding movement of the locking plug. When the locking plug has been fully inserted, the two furniture parts are firmly held together while preventing un-intentional or accidental release. Further, a decorative joint is provided for, since the locking plug when fully inserted into the insertion portion at least partly occupies and thereby conceals the mouth of the insertion portion. This is of special interest in the case of the second furniture part having a limited cross section which in itself cannot cover the insertion portion.

The groove may be formed by the second furniture part being a hollow profile, or by being formed in a wall portion of a solid profile. The groove may be used to support other features of a furniture system, such as rails, shelves etc. forming a third furniture part.

The guiding portion may have a cross section that prevents it from being removed from the groove in a direction transverse the longitudinal extension of the groove.

The protrusion may project from a base portion which is attachable to the second furniture part, said base portion comprising a guiding channel extending along the longitudinal direction and aligned with the groove of the second furniture part, and wherein the guiding channel is configured to slidingly receive the guiding portion of the locking plug. The guiding channel supports and guides the locking plug during sliding.

The base portion may comprise a flange extending transverse the longitudinal direction, said flange comprising a surface facing the protrusion, wherein the surface in a condition when the protrusion has been transferred to the locking portion is configured to abut a wall portion of the first furniture part. The flange serves the dual purpose of forming a restriction which limits the insertion length of the base portion into the second furniture part and forming a substantially flat abutment which fills the gap between the first and second furniture parts thereby preventing wriggling.

The locking plug may comprise a flange extending transverse the longitudinal direction, said flange, in a condition when the locking plug has been inserted into the insertion portion, being configured to abut a wall portion of the first furniture part and cover at least a portion of the boundary of the insertion portion. By covering the boundary, the insertion portion is visually concealed whereby a more aesthetical joint is provided.

The locking plug may comprise a sliding surface configured to be slidingly supported by an exterior wall portion of the second furniture during moving of the locking plug along the longitudinal direction.

The system as described above can be defined as a system comprising a first furniture part and a second furniture part, the first furniture part comprising a recess having a depth and having, transversely to the depth, an oblong shape and comprising an insertion portion and a locking portion, wherein the locking portion along an inner wall comprises a groove; the second furniture part comprising a groove having an extension along a longitudinal direction, the groove being configured to form part of a locking arrangement for coupling a third furniture part to the second furniture part; and the locking arrangement further comprising:
at least one protrusion forming part of or being attachable to the second furniture part, and having an extension along the longitudinal direction of said groove towards a free end of the protrusion, and comprising a rim extending transverse the longitudinal direction of said groove and along at least a part of the protrusion's circumference; and a locking plug configured to be inserted into the insertion portion in a condition when the protrusion has been inserted into the insertion portion and has been transferred to the locking portion, wherein the locking plug at least partly occupies the insertion portion and thereby counteracts transferring of the protrusion towards the insertion portion, and wherein the locking plug comprises a guiding portion configured to interact with the groove of the second furniture part thereby guiding the locking plug to move along the longitudinal direction of the groove during insertion of the locking plug into the insertion portion.

In another embodiment of the system, the locking plug may be arranged on a free end of a support element, said support element having an extension along the longitudinal direction and further having, at a longitudinal distance from a free end of the locking plug, an additional locking arrangement, said additional locking arrangement being configured to lockingly connect the support element to the second furniture part in a direction transverse the longitudinal direction. Accordingly, in this embodiment the locking is provided in two directions - in the longitudinal direction and in a direction transverse the longitudinal direction. This embodiment allows an easy disconnection of the two furniture parts, simply by removing the engagement between the second furniture part and the additional locking arrangement and then pulling out the locking plug by grasping the support element.

The additional locking arrangement may be a plug projecting from the support element and configured to be lockingly received in a hole in the second furniture part, or a through hole configured to receive a fixing member. The engagement between the hole and the envelope surface of the plug may be provided by friction. It may also be enhanced by using a supplemental fixing member such as a screw or a pin. The envelope surface of the plug may be provided with friction means such as barbs or the like.

In one embodiment, the plug may be an expansion plug configured to be lockingly received in the hole by a fixing member expanding the plug. The plug may have a hollow cross section. As the fixing member is inserted in the plug, the cross section of the plug is expanded whereby its exterior wall portions lockingly engage the inner walls of the hole. The locking engagement is provided by friction. It is to be understood that the locking engagement may be enhanced by the envelope surface of the plug being provided with non-disclosed friction means such as barbs or the like. The fixing member may by way of example be a screw or a pin.

The locking plug may comprise comprises a flange extending transverse the longitudinal direction, said flange comprising a surface facing the free end of the locking plug, wherein the surface in a condition when the locking plug has been transferred to the locking portion is configured to abut an exterior wall portion of the first furniture part. The flange serves the dual purpose of forming a restriction which limits the insertion length of the locking plug into the first furniture part and forming a substantially flat abutment which conceals the mouth of the insertion portion.

According to another aspect, the invention refers to the use of a system according to any of claims 1-10 to lockingly interconnect a first and a second furniture part. Non-limiting examples of furniture parts are drawers, joists, pedestals, sockets, and fittings used in e.g. a wardrobe. The advantages provided by the system as such have been thoroughly discussed above. The same advantages apply equally well for the use of such system. To avoid undue repetition reference is therefore made to the sections above.

Further objects and advantages of the present invention will be obvious to a person skilled in the art reading the detailed description given below describing different embodiments.

### Brief description of the drawings

The invention will be described in detail with reference to the schematic drawings.
Figs. 1a and 1b discloses a locking plug according to a first embodiment.
Fig. 2 discloses the locking plug schematically interacting with a second furniture part.
Fig. 3 discloses the mounting of the protrusion to the second furniture part.
Figs. 4a-4d discloses the mounting of a first and of a second furniture part by using the locking plug of the first embodiment.
Fig. 5 discloses a cross section of the resulting joint when using the locking plug of the first embodiment.
Figs. 6a-6d discloses the design and operation of a second embodiment of the locking plug.
Figs. 7a and 7b discloses a cross section of the resulting joint when using the locking plug of the second embodiment.

### Detailed description

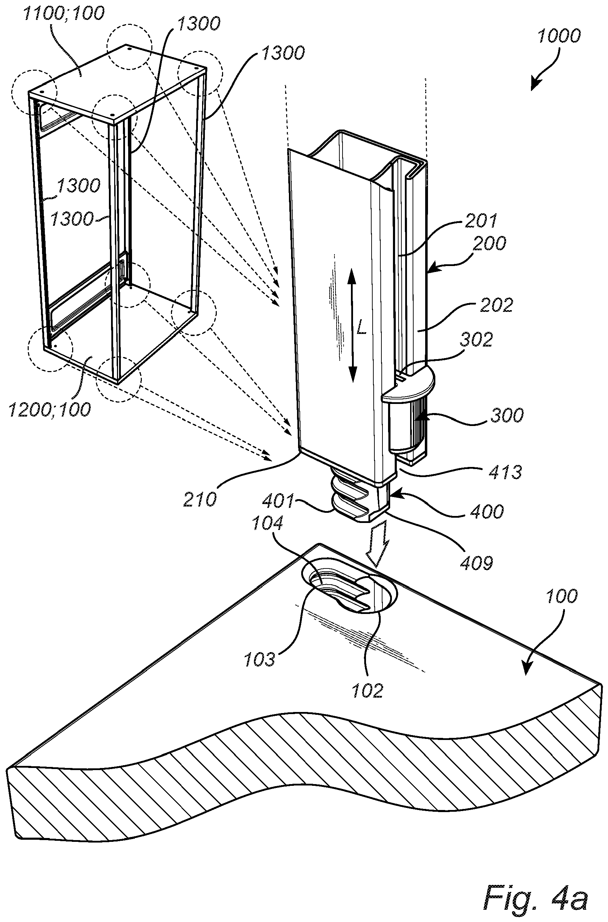

Starting with Fig. 4a, the overall design of a first embodiment of the system 1000 is disclosed. The system 1000 comprises a first furniture part 100, a second furniture part 200 and a locking arrangement in the form of a locking plug 300 and a protrusion 400. The locking arrangement is used to lockingly interconnect the first and the second furniture parts 100, 200 without the need of any tooling.

To facilitate the description below, the term longitudinal direction L will be used. In the context of the invention and its description, the longitudinal direction L corresponds to the longitudinal direction of the second furniture part 200 which will be described as a post unless nothing else is given.

The first furniture part 100 comprises a recess 101 having a depth smaller than the thickness of the first furniture part 100. The recess 101 has an oblong shape and comprises along its longitudinal extension an insertion portion 102 and a locking portion 103. The insertion portion 102 and the locking portion 103 merge to form the oblong recess 101. The insertion portion 102 has a diameter exceeding the diameter of the protrusion 400. The inner walls of the insertion portion102 are preferably substantially smooth. The inner walls of the locking portion 103 are at least along a wall portion opposite the insertion portion 102 provided with grooves 104. The number of grooves 104 corresponds to the number of rims 401 of the protrusion 400. The grooves 104 have a depth corresponding to the diameter of the rims 401 of the protrusion 400.

The first furniture part 100 may be formed by any suitable material, such as fiberboard, solid wood or plastic material. The first furniture part 100 should have a thickness large enough to allow formation of the recess 101. The thickness is preferably at least 7 mm and more preferred at least 10 mm.

The second furniture part 200 is disclosed as a hollow tube. The tube may by way of example be an extruded profile. It is to be understood that the cross section of the second furniture part 200 with remained function may be solid. The second furniture part 200 has a longitudinal direction L and is configured to be mounted substantially perpendicularly to a major surface of the first furniture part 100.

The second furniture part 200 has in the disclosed embodiment a groove 201 extending in the longitudinal direction L along a longitudinal side wall 202. In case of an extruded profile, the groove 201 may be formed during the extrusion. In case of a solid cross section, the groove 201 may be formed by e.g. milling.

The second furniture part 200 may be formed by any material such as metal, plastics, wood or a mixture thereof. The groove 201 may be configured to form part of a locking arrangement for coupling a non-disclosed third furniture part to the second furniture part 200.

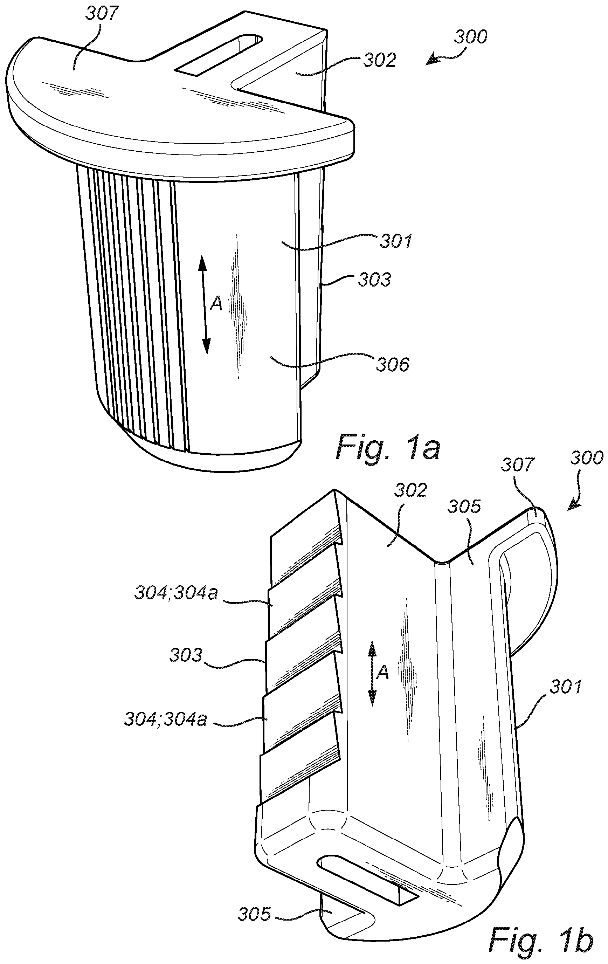

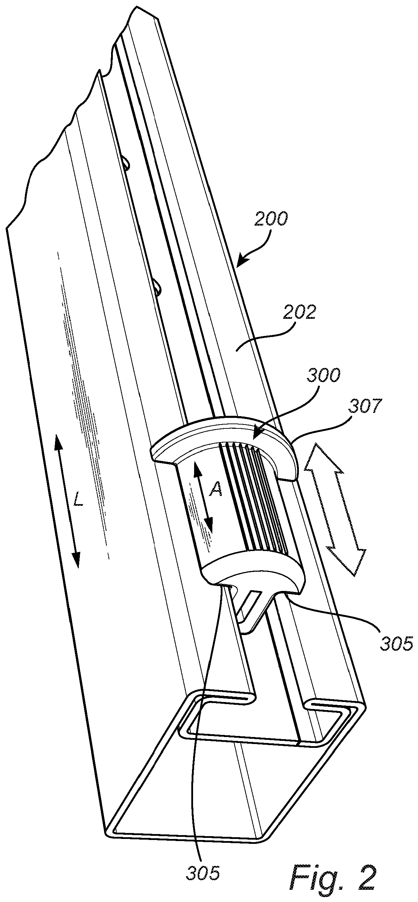

Now turning to Figs. 1a, 1b and 2, a first embodiment of the locking plug 300 will be described. The locking plug 300 comprises a body 301 and a guiding portion 302. The body 301 and the guiding portion 302 have a longitudinal extension A coinciding with the longitudinal direction L of the second furniture part 200. The guiding portion 302 is during use configured to extend into and along the groove 201 of the second furniture part 200. The guiding portion 302 has a width that is slightly smaller than the width of the groove 201. Thereby, the locking plug 300 is linearly movable and guided by sliding along the groove 201.

The guiding portion 302 may have a cross section that prevents it from being removed from the groove 201 in a direction transverse the longitudinal direction L. This may be provided e.g. by providing the guiding portion 302 with a non-disclosed depression having a width being smaller than the width of the groove 201 or by providing dimples or the like along the longitudinal extension A of the guiding portion 302.

The guiding portion 302 comprises a friction surface 303 extending along the longitudinal extension A. In the disclosed embodiment, the friction surface 303 is provided with a plurality of friction members 304 extending transverse the longitudinal extension A. The friction members 304 are in the disclosed embodiment arranged as a plurality of ratchets 304a, 304b. The friction surface 303 is configured to lockingly or wedgingly abut a guiding surface 402 of the protrusion 400 to be described below.

The body 301 of the locking plug 300 comprises, on opposite sides of the guiding portion 302, a sliding surface 305 configured to face the exterior side wall portion 202 of the second furniture part 200. The body 301 is configured to be slidingly supported by the sliding surface 305 abutting the exterior side wall portion 202.

The opposite envelope surface 306 of the body 301 has as seen in cross section a single-curved surface extension. This extension preferably corresponds to the cross section of the insertion portion 102 of the recess 101 as seen transverse its depth. The body 301 and its function will be described below.

The locking plug 300 comprises a flange 307 extending transverse the longitudinal extension A.

The locking plug 300 may be formed in one piece, e.g. by injection molding a plastic material.

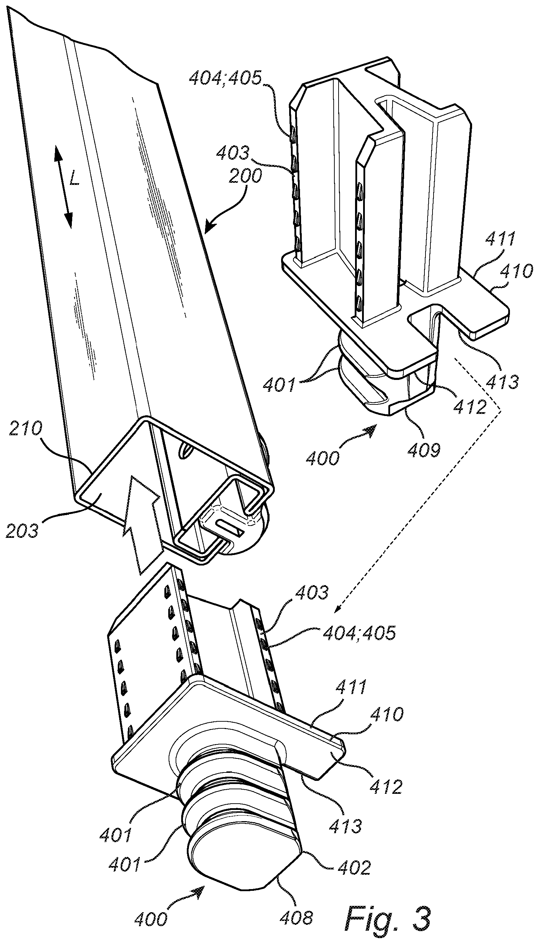

Now turning to Fig. 3, one embodiment of the protrusion 400 is disclosed. The protrusion 400 has an extension along the longitudinal direction L towards a free end of the protrusion 400. The protrusion 400 projects from a base portion 403 which is attachable to a free end 210 of the second furniture part 200. It is to be understood that the base portion 403 with remained function may be integral with, and thereby form part of the second furniture part 200. The base portion 403 is configured to be lockingly inserted into the free end 210 of the second furniture part 200. The outer wall portion 404 of the base portion 403 comprises a plurality of friction means 405 configured to lockingly interact with the inner walls 203 of the second furniture part 200.

The base portion 403 comprises a flange 410 that extends transverse the longitudinal direction L. The flange 410 comprises a first surface 411 configured to abut the free end 210 of the second furniture part 200. Also, the flange 410 comprises a second surface 412 facing the protrusion 400. The second surface 412 is in a condition when the protrusion 400 has been transferred to the locking portion 103 of the recess 101 configured to abut the exterior wall portion 107 of the first furniture part 100.

The flange 410 comprises a guiding channel 413 which, when the base portion 403 is attached to the second furniture part 200, is aligned with the groove 201 of the second furniture part 200. The guiding channel 413 is configured to slidingly receive the guiding portion 302 of the locking plug 300. The guiding channel 413 may have a longitudinal extension in the longitudinal direction L along a portion of the base portion 403.

The protrusion 400 comprises a plurality of rims 401 that extend transverse its longitudinal extension. The rims 401 are arranged one after the other along the longitudinal extension. It is to be understood that the number of rims 401 may be at least one with remained function. The rims 401 constitute locking means configured to lockingly engage the grooves 104 in the locking portion 103 of the recess 101 to be discussed below.

The protrusion 400 is disclosed as being provided with a chamfering 408 providing the protrusion 400 with a non-rotational cross section. Thus, the rims 401 are only provided along a portion of the envelope surface of the protrusion 400.

Now turning to Fig. 4a anew, the operation of the system 1000 with the above described locking plug 300 will be described. The system 1000 will be described based on the furniture having a frame like design with a top panel 1100 and a bottom panel 1200 and four posts 1300 extending there between. Each panel 1100, 1200 forms a first furniture part 100 and each post 1300 forms one of four second furniture parts 200.

The first furniture part 100 comprises a recess 101 with a design as described above. Further, each second furniture part 200 is provided with a protrusion 400 which is arranged in its free end 210 and with a locking plug 300 which is slidingly received in the longitudinally extending groove 201.

As a first step, see Fig. 4a, the operator moves the free end 210 of the second furniture part 200 in the longitudinal direction L towards the insertion portion 102 of the recess 101. The second furniture part 200 has been prepared by inserting the guiding portion 302 of the locking plug 300 into the groove 201 and also by inserting the base portion 403 of the projection 400 into the hollow post 1300. In this position, the locking plug 300 is prevented by the base portion 403 from falling out.

When mounting the second furniture part 200 to the first furniture part 100, the second furniture part 200 is moved towards first furniture part 100 by a linear movement perpendicular to the major surface of the first furniture part 100. During this movement, the free end of the protrusion 400 is inserted into and received in the insertion portion 102 of the recess 101.

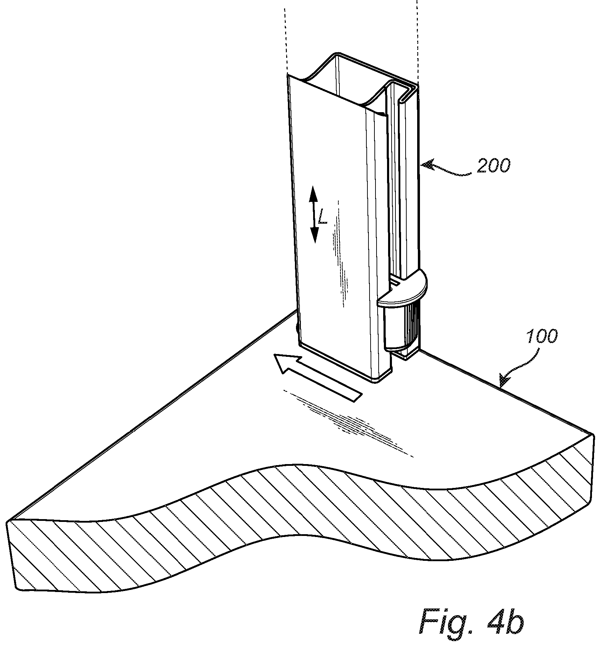

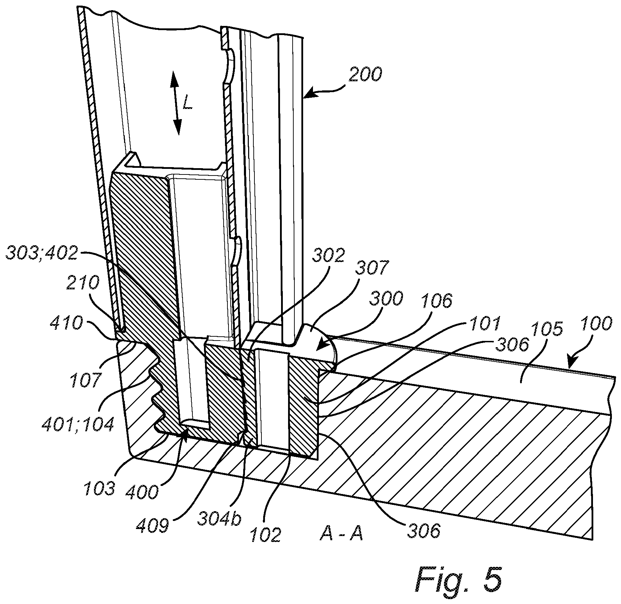

When fully inserted, see Fig. 4b and 5, the second furniture part 200 is pushed linearly in a direction transverse to the longitudinal direction L of the second furniture part 200. During the pushing, the protrusion 400 will be moved from the insertion portion 102 of the recess 101 towards the locking portion 103. When the protrusion 400 has been fully inserted in the locking portion 103, the rims 401 of the protrusion 400 engage the grooves 104 in the inner wall of the locking portion 103, thereby counteracting relative movement between the first and the second furniture parts 100; 200 along the longitudinal direction L.

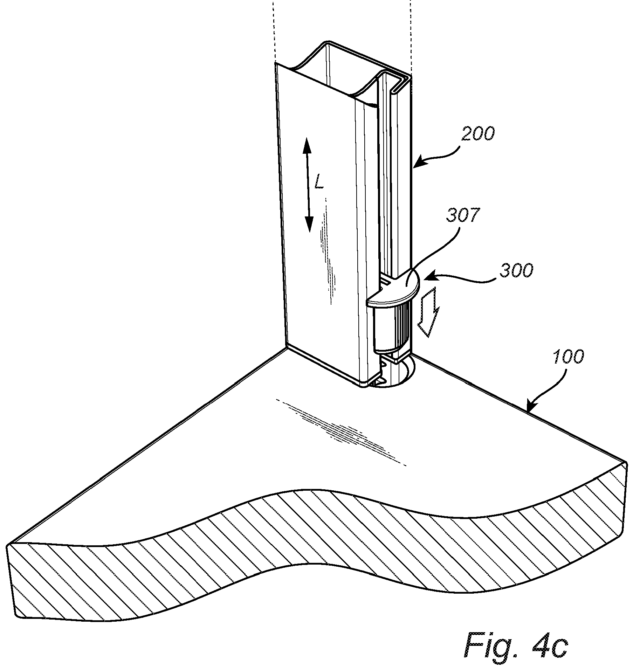

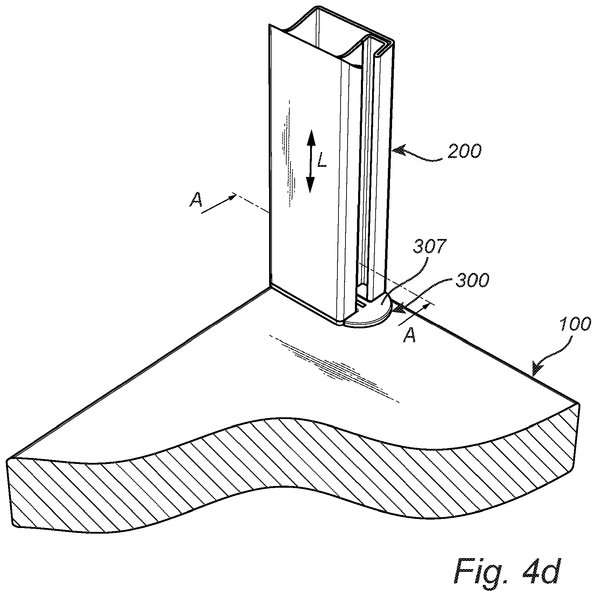

As a consequence, the mouth of the insertion portion 102 is left open, see Fig. 4c. Also the second furniture part 200 is movable in the reverse direction allowing an unintentional disassembling of the furniture. To prevent this, the locking plug 300 is now as a next step pushed along the longitudinal direction L towards the insertion portion 102 by applying a pressure to its flange 307. The locking plug 300 is pushed all the way down into the insertion portion 102, see Fig. 4d and Fig. 5.

In this locked position, the body 301 and the guiding portion 302 of the locking plug 300 occupy the insertion portion 102 of the recess 101. More precisely, in this locked position, the friction surface 303 of the locking plug 300 lockingly and/or wedgingly abuts the chamfered guiding surface 402 of the protrusion 400. Also, the envelope surface 306 of the body 301 may abut the inner wall of the insertion portion 102. The second furniture part 200 is thereby prevented from being moved in a direction transverse the longitudinal direction L.

As is best seen in Fig. 5, when the locking plug 300 has been completely inserted, the lower most friction member 304b in the lower end of the locking plug 300 lockingly engages a corresponding depression 409 in the free end of the protrusion 400. This engagement prevents removal of the locking plug 300. Further, the engagement may be used to provide a tactile and/or audial confirmation to the operator that the locking plug 300 has been fully inserted.

Also in this position, the flange 307 of the locking plug 300 in is flush with the free end 210 of the second furniture part 200. Likewise, in the opposite end next to the locking portion 103 of the recess 101, the flange 410 of the base portion 403 abuts the exterior wall portion 107 of the first furniture part 100 while also supporting the free end 210 of the second furniture part 200.

The cross sectional extension of the flange 307 is larger than the cross section of the insertion portion 102. The flange 307 is thereby, in a condition when the locking plug 300 has been inserted into the insertion portion 102, configured to abut an exterior wall portion 105 of the first furniture part 100 and cover at least a portion of the boundary 106 of the insertion portion 102 and also abut the exterior wall 107 of the first furniture part 100. Thereby the flange 303 visually conceals the insertion portion 102 which makes the joint aesthetically more appealing.

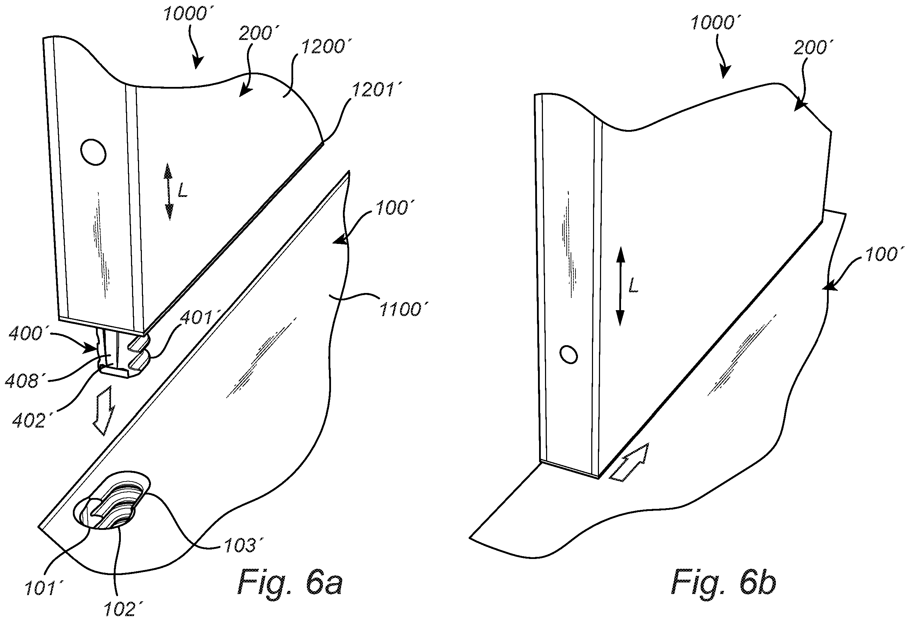

Now turning to Figs 6a-6d a second embodiment of the system 1000' is disclosed. The system 1000' comprises a first furniture part 100', a second furniture part 200' and a locking arrangement. The locking arrangement comprises a locking plug 300' and a protrusion 400'.

The first furniture part 100' exemplified as a panel 1100', see Fig 6a comprises a recess 101'. The recess 101' has the same design as that previously described in in view of Fig. 4c, i.e. the recess 101' has an oblong shape and comprises along its longitudinal extension an insertion portion 102' and a locking portion 103'. The insertion portion 102' and the locking portion 103' merge to form the oblong recess 101'. The insertion portion 102' has a diameter exceeding the diameter of the protrusion 400'. The inner walls of the insertion portion102' are preferably substantially smooth. The inner walls of the locking portion 103' are at least along a wall portion opposite the insertion portion 102' provided with grooves 104'. The number of grooves 104' corresponds to the number of rims 401' of the protrusion 400'. The grooves 104' have a depth corresponding to the diameter of the rims 401' of the protrusion 400'.

The second furniture part 200' is exemplified by a panel 1200' which along one of its transverse edge portions 1201' is provided with a protrusion 400'. The protrusion 400' has an extension along the longitudinal direction L of the second furniture part 200' towards its free end.

The protrusion 400' comprises a plurality of rims 401' that extend transverse the longitudinal direction L. The rims 401' are arranged one after the other along the longitudinal extension of the protrusion 400'. It is to be understood that the number of rims 401' may be at least one with remained function. The rims 401' constitute locking means configured to lockingly engage the grooves 104' in the locking portion 103' of the recess 101'. The protrusion 400' is disclosed as being provided with a chamfering 408' providing the protrusion 400' with a non-rotational cross section. Thus, the rims 401' are only provided along a portion of the envelope surface of the protrusion 400.

The mounting of the first and second furniture parts 100', 200' is the same as previously described. As a first step, see Fig. 6a, the operator moves the free end 1201' of the second furniture part 200' in the longitudinal direction L towards the insertion portion 102' of the recess 101'.

Then, the second furniture part 200' is moved towards first furniture part 100' by a linear movement perpendicular to the major surface of the first furniture part 100' so that the free end of the protrusion 400' is inserted into and received in the insertion portion 102' of the recess 101'. When fully inserted, see Fig. 6b, the second furniture part 200' is pushed linearly by applying a force to the second furniture part 200' in a direction transverse the longitudinal direction L of the second furniture part 200'. During the pushing, the protrusion 400' is moved from the insertion portion 102' towards the locking portion 103'. When the protrusion 400' has been fully inserted in the locking portion 103', the rims 401' engage the grooves 104' in the inner wall of the locking portion 103', thereby counteracting relative movement between the first and the second furniture parts 100', 200' along the longitudinal extension of the protrusion 400'.

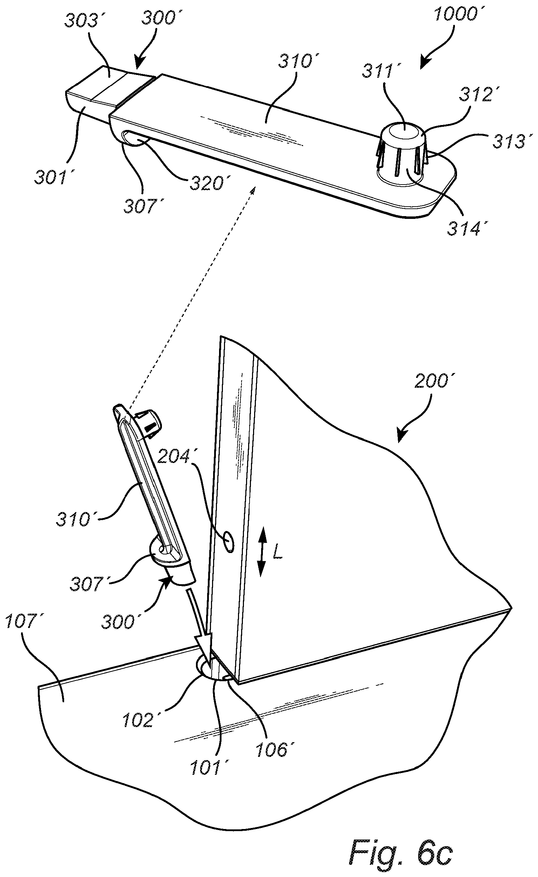

As a consequence of this movement of the second furniture part 200', see Fig. 6c, the mouth of the insertion portion 102' is open and also the second furniture part 200' is movable in the reverse direction allowing an unintentional disassembling of the furniture. To conceal the insertion portion 102' and also to prevent unintentional disconnecting, a locking plug 300' of the second embodiment may be used.

The locking plug 300' of the second embodiment is arranged on a free end of a support element 310'. The locking plug 300' and the support element 310' have an extension along the longitudinal direction L of the second furniture part 200'. The locking plug 300' is provided by a body 301' having, as seen in cross section, a single-curved surface extension with a cross section corresponding to the cross section of the insertion portion 102' of the recess 101'.

The locking plug 300' comprises a friction surface 303' extending along the longitudinal direction L. The friction surface 303' is configured to lockingly or wedgingly abut a corresponding guiding surface 402' provided by the chamfering 408' of the protrusion 400' in a condition when the locking plug 300' has been inserted into the insertion portion 102'.

The locking plug 300' comprises at its rear end a flange 307' having an extension transverse the longitudinal direction L. The cross section of the flange 307' is larger than the cross section of the insertion portion 102'. The flange 307' comprises a surface 320' facing the free end of the locking plug 300'. The surface 320' is, in a condition when the locking plug 300' has been inserted into the insertion portion 102' configured to abut the exterior wall portion 107' of the first furniture part 100' and cover at least a portion of the boundary 106' of the insertion portion 102' and also abut the exterior wall portion 107' of the first furniture part 100'.

The support element 310' has, see Fig. 6c, at a longitudinal distance from a free end of the locking plug 300', an additional locking arrangement 311'. The additional locking arrangement 311' is configured to lockingly connect the support element 310' to the second furniture part 200' in a direction transverse the longitudinal direction L. The additional locking arrangement 311' is in the disclosed embodiment a plug 312' projecting from the support element 310' and configured to be lockingly received in a corresponding hole 204' arranged in the second furniture part 200'. The plug 312' is on its exterior envelope surface 313' provided with a plurality of friction members 314'. The disclosed plug 312' is an expander plug having a hollow cross section.

The support element 310' with the locking plug 300' and the additional locking arrangement 311' may be provided as an integral unit formed by e.g. injection molding a plastic material.

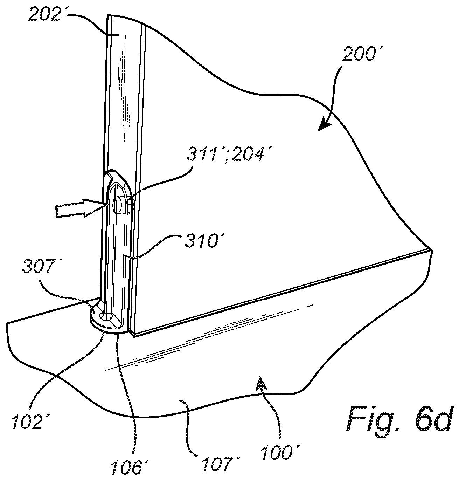

When using the locking plug 300' according to this embodiment, see Fig. 6c, the locking plug 300' together with the support element 310' is pushed along the longitudinal direction L towards the insertion portion 102'. The locking plug 300' is pushed all the way down into the insertion portion 102', and then the plug 312' of the additional locking arrangement 311' is inserted into the hole 204' in the second furniture part 200', see Fig. 6d. The insertion of the plug 312' into the hole 204' is facilitated by an inherent flexibility of the support element 310'. In this position the support element 310' will closely abut the exterior wall portion 202' of the second furniture part 200'. Further, the flange 307' at the rear end of the locking plug 300' abuts the exterior wall portion 107' of the first furniture part 100', thereby concealing the mouth of the insertion portion 102'.

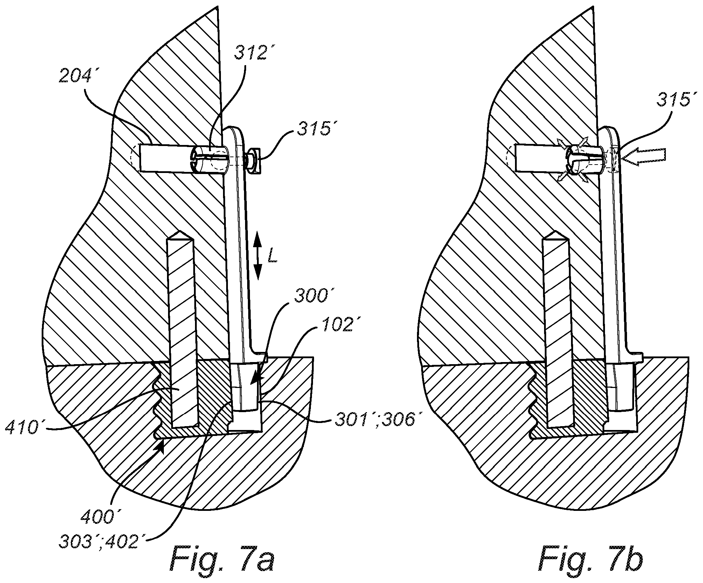

As is best seen in Figs. 7a and 7b, in this position, the locking plug 300' at least partly occupies the insertion portion 102' and thereby counteracts transferring of the protrusion 400' towards the insertion portion 102'. This is provided by the envelope surface 306' of the body 301' of the locking plug 300' abutting the inner wall of the insertion portion 102'. The second furniture part 200' is thereby prevented from being moved in a direction transverse the longitudinal direction L. Also, the friction surface 303' of the locking plug 300', lockingly abuts the guiding surface 402' of the protrusion 400'.

As is disclosed in Figs. 7a and 7b, the plug 312' is an expansion plug configured to be lockingly received in the hole 204' by a fixing member 315' expanding the plug 312'. The plug 312' has a hollow cross section. As the fixing member 315' is inserted in the plug 312', the cross section of the plug is expanded whereby its exterior wall portions lockingly engage the inner walls of the hole 312'. The locking engagement is hence provided by friction. It is to be understood that the locking engagement may be enhanced by the envelope surface of the plug 312' being provided with non-disclosed friction means such as barbs or the like. The fixing member 315' may by way of example be a screw or a pin.

As a non-disclosed alternative to the additional locking arrangement 311' being a plug, it can, with remained function be replaced by a through hole configured to receive a fixing member, such as a screw, engaging the second furniture part 200'.

It is to be noted that Figs 7a and 7b discloses that the protrusion 400' as an alternative to being attached to the second furniture part 200' by being inserted into a hollow profile, may be attached by e.g. a fixing member 410' such as a plug or a screw.

Although the protrusions 400, 400' are disclosed as having a chamfered cross section, it is to be understood that other cross sections are possible, such as a circular cross section.

## Claims

1. System comprising a first furniture part (100; 100'), a second furniture part (200; 200') and a locking arrangement,
the first furniture part (100; 100') comprising a recess (101; 101') having a depth and having, transversely to the depth, an oblong shape and an insertion portion (102; 102') and a locking portion (103; 103'), wherein the locking portion (103; 103') along an inner wall thereof comprises a groove (104; 104')
the second furniture part (200; 200') comprising a wall portion having an extension along a longitudinal direction (L), and
the locking arrangement comprising:
a protrusion (400; 400') forming part of or being attachable to the second furniture part (200; 200'), and having an extension along the longitudinal direction (L) towards a free end of the protrusion (400; 400'), and comprising a rim (401; 401') extending transverse the longitudinal direction (L) and along at least a part of the protrusion's (400; 400') circumference;
and a locking plug (300; 300') configured to be lockingly inserted into the insertion portion (102: 102') in a condition when the protrusion (400; 400') has been inserted into the insertion portion (102; 102') and has been transferred to the locking portion (103; 103'), wherein the locking plug (300; 300') at least partly occupies the insertion portion (102; 102') and thereby counteracts transferring of the protrusion (400; 400') towards the insertion portion (102; 102'), and
wherein the locking plug (300; 300') comprises a friction surface (303: 303') extending along the longitudinal direction (L), said friction surface (303; 303') being configured to lockingly or wedgingly abut a guiding surface (402; 402') of the protrusion (400; 400') in a condition when the locking plug (300; 300') has been inserted into the insertion portion (102; 102').

2. System according to claim 1, wherein the second furniture part (200) comprises a groove (201) having an extension along the longitudinal direction (L); wherein the locking plug (300) comprises a guiding portion (302) configured to interact with the groove (201) thereby providing guiding of the locking plug (300) during insertion of the locking plug (300) into the insertion portion (102).

3. System according to claim 2, wherein the protrusion (400) projects from a base portion (403) which is attachable to the second furniture part (200), said base portion (403) comprising a guiding channel (413) extending along the longitudinal direction (L) and being aligned with the groove (201) of the second furniture part (200), and wherein the guiding channel (413) is configured to slidingly receive the guiding portion (302) of the locking plug (300).

4. System according to claim 3, wherein the base portion (403) comprises a flange (410) extending transverse the longitudinal direction (L), said flange (410) comprising a surface (412) facing the protrusion (400), wherein the surface (412) in a condition when the protrusion (400) has been transferred to the locking portion (103) is configured to abut an exterior wall portion (105) of the first furniture part (100).

5. System according to any of the preceding claims, wherein the locking plug (300) comprises a flange (307) extending transverse the longitudinal direction (L), said flange (307), in a condition when the locking plug (300) has been inserted into the insertion portion (102), is configured to abut an exterior wall portion (105) of the first furniture part (100) and cover at least a portion of the boundary (106) of the insertion portion (102).

6. System according to any of the preceding claims, wherein the locking plug (300) comprises a sliding surface (305) configured to be slidingly supported by an exterior wall portion (202) of the second furniture part (200) during moving of the locking plug (300) along the longitudinal direction (L).

7. System according to claim 1, wherein the locking plug (300') is arranged on a free end of a support element (310'), said support element (310') having an extension along the longitudinal direction (L) and further having, at a longitudinal distance from a free end of the locking plug (300'), an additional locking arrangement (311'), said additional locking arrangement (311') being configured to lockingly connect the support element (310') to the second furniture part (200') in a direction transverse the longitudinal direction (L).

8. System according to claim 7, wherein the additional locking arrangement (311') is a plug (312') projecting from the support element (310') and configured to be lockingly received in a hole (204') in the second furniture part (200'), or
wherein the additional locking arrangement is a through hole configured to receive a fixing member (315').

9. System according to claim 8, wherein the plug (312') is an expansion plug configured to be lockingly received in the hole (204') by the fixing member (315') expanding the plug (312').

10. System according to claim 7 or 8, wherein the locking plug (300') comprises a flange (307' extending transverse the longitudinal direction (L), said flange (307') comprising a surface (320') facing the free end of the locking plug (300'), wherein the surface (320') in a condition when the locking plug (300') has been transferred to the locking portion (103') is configured to abut an exterior wall portion (107') of the first furniture part (100').

11. Use of a system according to any of claims 1-10 to lockingly interconnect a first and a second furniture part (100, 200).

## Patentansprüche

1. System mit einem ersten Möbelteil (100; 100'), einem zweiten Möbelteil (200; 200') und einer Verriegelungsanordnung,
wobei das erste Möbelteil (100; 100') eine Ausnehmung (101; 101') aufweist, die eine Tiefe und quer zu der Tiefe eine längliche Form und einen Einsteckabschnitt (102; 102; 102') und einen Verriegelungsabschnitt (103; 103') hat, wobei der Verriegelungsabschnitt (103; 103') entlang einer Innenwand davon eine Nut (104; 104') umfasst,
wobei das zweite Möbelteil (200; 200') einen Wandabschnitt mit einer Erstreckung entlang einer Längsrichtung (L) umfasst, und wobei die Verriegelungsanordnung umfasst:
einen Vorsprung (400; 400'), der einen Teil des zweiten Möbelteils (200; 200') bildet oder daran befestigbar ist und eine Erstreckung entlang der Längsrichtung (L) in Richtung eines freien Endes des Vorsprungs (400; 400') aufweist und einen Rand (401; 401') umfasst, der sich quer zu der Längsrichtung (L) und entlang mindestens eines Teils des Umfangs des Vorsprungs (400; 400') erstreckt;
und einen Verriegelungsstopfen (300; 300'), der so konfiguriert ist, dass er verriegelnd in den Einsteckabschnitt (102: 102') eingesteckt werden kann, in einem Zustand, in dem der Vorsprung (400; 400') in den Einsteckabschnitt (102; 102') eingesteckt und zu dem Verriegelungsabschnitt (103; 103') überführt worden ist, wobei der Verriegelungsstopfen (300; 300') zumindest teilweise den Einstecksabschnitt (102; 102') einnimmt und dadurch einer Überführung des Vorsprungs (400; 400') in Richtung des Einsteckabschnitts (102; 102') entgegenwirkt, und
wobei der Verriegelungsstopfen (300; 300') eine Reibungsfläche (303: 303') aufweist, die sich entlang der Längsrichtung (L) erstreckt, wobei die Reibungsfläche (303; 303') so konfiguriert ist, dass sie in einem Zustand, in dem der Verriegelungsstopfen (300; 300') in den Einsteckabschnitt (102; 102') eingesteckt ist, verriegelnd oder keilartig an einer Führungsfläche (402; 402') des Vorsprungs (400; 400') anliegt.

2. System nach Anspruch 1, wobei das zweite Möbelteil (200) eine Nut (201) mit einer Erstreckung entlang der Längsrichtung (L) aufweist; wobei der Verriegelungsstopfen (300) einen Führungsabschnitt (302) aufweist, der so konfiguriert ist, dass er mit der Nut (201) zusammenwirkt, wodurch eine Führung des Verriegelungsstopfens (300) während des Einsteckens des Verriegelungsstopfens (300) in den Einsteckabschnitt (102) bereitgestellt wird.

3. System nach Anspruch 2, wobei der Vorsprung (400) von einem Basisabschnitt (403) vorsteht, der an dem zweiten Möbelteil (200) befestigbar ist, wobei der Basisabschnitt (403) einen Führungskanal (413) umfasst, der sich entlang der Längsrichtung (L) erstreckt und mit der Nut (201) des zweiten Möbelteils (200) ausgerichtet ist, und wobei der Führungskanal (413) so konfiguriert ist, dass er den Führungsabschnitt (302) des Verriegelungsstopfens (300) gleitend aufnimmt.

4. System nach Anspruch 3, wobei der Basisabschnitt (403) einen Flansch (410) aufweist, der sich quer zu der Längsrichtung (L) erstreckt, wobei der Flansch (410) eine Oberfläche (412) aufweist, die dem Vorsprung (400) zugewandt ist, wobei die Oberfläche (412) in einem Zustand, in dem der Vorsprung (400) zu dem Verriegelungsabschnitt (103) überführt worden ist, so konfiguriert ist, dass sie an einem Außenwandabschnitt (105) des ersten Möbelteils (100) anliegt.

5. System nach einem der vorhergehenden Ansprüche, wobei der Verriegelungsstopfen (300) einen Flansch (307) aufweist, der sich quer zu der Längsrichtung (L) erstreckt, wobei der Flansch (307) in einem Zustand, in dem der Verriegelungsstopfen (300) in den Einsteckabschnitt (102) eingesteckt ist, so konfiguriert ist, dass er an einem Außenwandabschnitt (105) des ersten Möbelteils (100) anliegt und mindestens einen Teil der Begrenzung (106) des Einsteckabschnitts (102) abdeckt.

6. System nach einem der vorhergehenden Ansprüche, wobei der Verriegelungsstopfen (300) eine Gleitfläche (305) aufweist, die so konfiguriert ist, dass sie während der Bewegung des Verriegelungsstopfens (300) entlang der Längsrichtung (L) gleitend von einem Außenwandabschnitt (202) des zweiten Möbelteils (200) getragen wird.

7. System nach Anspruch 1, wobei der Verriegelungsstopfen (300') an einem freien Ende eines Trägerelements (310') angeordnet ist, wobei das Trägerelement (310') eine Erstreckung entlang der Längsrichtung (L) aufweist und ferner in einem Längsabstand von einem freien Ende des Verriegelungsstopfens (300') eine zusätzliche Verriegelungsanordnung (311') aufweist, wobei die zusätzliche Verriegelungsanordnung (311') konfiguriert ist, um das Trägerelement (310') mit dem zweiten Möbelteil (200') in einer Richtung quer zur Längsrichtung (L) verriegelnd zu verbinden.

8. System nach Anspruch 7, wobei die zusätzliche Verriegelungsanordnung (311') ein Stopfen (312') ist, der von dem Trägerelement (310') vorsteht und so konfiguriert ist, dass er verriegelnd in einem Loch (204') in dem zweiten Möbelteil (200') aufgenommen wird, oder wobei die zusätzliche Verriegelungsanordnung ein Durchgangsloch ist, das so konfiguriert ist, dass es ein Befestigungselement (315') aufnimmt.

9. System nach Anspruch 8, wobei der Stopfen (312') ein Spreizstopfen ist, der so konfiguriert ist, dass er durch das den Stopfen (312') spreizende Befestigungselement (315') verriegelnd in dem Loch (204') aufgenommen wird.

10. System nach Anspruch 7 oder 8, wobei der Verriegelungsstopfen (300') einen Flansch (307') aufweist, der sich quer zur Längsrichtung (L) erstreckt, wobei der Flansch (307') eine Oberfläche (320') aufweist, die dem freien Ende des Verriegelungsstopfens (300') zugewandt ist, wobei die Oberfläche (320') in einem Zustand, in dem der Verriegelungsstopfen (300') zu dem Verriegelungsabschnitt (103') überführt worden ist, so konfiguriert ist, dass sie an einem Außenwandabschnitt (107') des ersten Möbelteils (100') anliegt.

11. Verwendung eines Systems nach einem der Ansprüche 1-10, um ein erstes und ein zweites Möbelteil (100, 200) verriegelnd miteinander zu verbinden.

## Revendications

1. Système comprenant une première partie de meuble (100 ; 100'), une seconde partie de meuble (200 ; 200') et un agencement de verrouillage,
la première partie de meuble (100 ; 100') comprenant un évidement (101 ; 101') ayant une profondeur et ayant, transversalement à la profondeur, une forme oblongue et une partie d'introduction (102 ; 102') et une partie de verrouillage (103 ; 103'), dans lequel la partie de verrouillage (103 ; 103') comprend une rainure (104 ; 104') le long de sa paroi intérieure
la seconde partie de meuble (200 ; 200') comprenant une partie de paroi ayant une étendue dans une direction longitudinale (L), et
l'agencement de verrouillage comprenant :
une saillie (400 ; 400') faisant partie de la seconde partie de meuble (200 ; 200'), ou pouvant être fixée à cette dernière, et ayant une étendue dans la direction longitudinale (L) en direction d'une extrémité libre de la saillie (400 ; 400'), et comprenant une bordure (401 ; 401') s'étendant transversalement à la direction longitudinale (L) et sur au moins une partie de la circonférence de la saillie (400 ; 400') ;
et un bouchon de verrouillage (300 ; 300') conçu pour être introduit de manière verrouillée dans la partie d'introduction (102 ; 102') dans un état dans lequel la saillie (400 ; 400') a été introduite dans la partie d'introduction (102 ; 102') et a été transférée vers la partie de verrouillage (103 ; 103'), dans lequel le bouchon de verrouillage (300 ; 300') occupe au moins partiellement la partie d'introduction (102 ; 102') et s'oppose ainsi à un transfert de la saillie (400 ; 400') en direction de la partie d'introduction (102 ; 102'), et
dans lequel le bouchon de verrouillage (300, 300') comprend une surface de frottement (303 ; 303') s'étendant dans la direction longitudinale (L), ladite surface de frottement (303 ; 303') étant conçue pour venir en butée de verrouillage ou de coinçage contre une surface de guidage (402 ; 402') de la saillie (400 ; 400') dans un état dans lequel le bouchon de verrouillage (300 ; 300') a été introduit dans la partie d'introduction (102 ; 102').

2. Système selon la revendication 1, dans lequel la seconde partie de meuble (200) comprend une rainure (201) ayant une étendue dans la direction longitudinale (L) ; dans lequel le bouchon de verrouillage (300) comprend une partie de guidage (302) conçue pour interagir avec la rainure (201) fournissant ainsi un guidage du bouchon de verrouillage (300) pendant l'introduction du bouchon de verrouillage (300) dans la partie d'introduction (102).

3. Système selon la revendication 2, dans lequel la saillie (400) fait saillie d'une partie de base (403) qui peut être fixée à la seconde partie de meuble (200), ladite partie de base (403) comprenant un canal de guidage (413) s'étendant dans la direction longitudinale (L) et étant aligné avec la rainure (201) de la seconde partie de meuble (200), et dans lequel le canal de guidage (413) est conçu pour recevoir de manière coulissante la partie de guidage (302) du bouchon de verrouillage (300).

4. Système selon la revendication 3, dans lequel la partie de base (403) comprend un rebord (410) s'étendant transversalement à la direction longitudinale (L), ledit rebord (410) comprenant une surface (412) en regard de la saillie (400), dans lequel la surface (412), dans un état dans lequel la saillie (400) a été transférée vers la position de verrouillage (103), est configurée pour venir en butée contre une partie de paroi extérieure (105) de la première partie de meuble (100).

5. Système selon l'une quelconque des revendications précédentes, dans lequel le bouchon de verrouillage (300) comprend un rebord (307) s'étendant transversalement à la direction longitudinale (L), ledit rebord (307), dans un état dans lequel le bouchon de verrouillage (300) a été introduit dans la partie d'introduction (102), est conçu pour venir en butée contre une partie de paroi extérieure (105) de la première partie de meuble (100) et pour couvrir au moins une partie de la délimitation (106) de la partie d'introduction (102).

6. Système selon l'une quelconque des revendications précédentes, dans lequel le bouchon de verrouillage (300) comprend une surface coulissante (305) configurée pour être supportée coulissante par une partie de paroi extérieure (202) de la seconde partie de meuble (200) pendant un déplacement du bouchon de verrouillage (300) dans la direction longitudinale (L).

7. Système selon la revendication 1, dans lequel le bouchon de verrouillage (300') est disposé sur une extrémité libre d'un élément de support (310'), ledit élément de support (310') ayant une étendue dans la direction longitudinale (L) et comportant en outre, à une distance longitudinale d'une extrémité libre du bouchon de verrouillage (300'), un agencement de verrouillage supplémentaire (311'), ledit agencement de verrouillage supplémentaire (311') étant conçu pour relier de manière verrouillante l'élément de support (310') à la seconde partie de meuble (200') dans une direction transversale à la direction longitudinale (L).

8. Système selon la revendication 7, dans lequel l'agencement de verrouillage supplémentaire (311') est un bouchon (312') faisant saillie de l'élément de support (310') et conçu pour être reçu de manière verrouillante dans un trou (204') ménagé dans la seconde partie de meuble (200'), ou
dans lequel l'agencement de verrouillage supplémentaire est un trou traversant conçu pour recevoir un élément de fixation (315').

9. Système selon la revendication 8, dans lequel le bouchon (312') est un bouchon à élargissement conçu pour être reçu de manière verrouillante dans le trou (204') par l'élément de fixation (315') élargissant le bouchon (312').

10. Système selon la revendication 7 ou la revendications 8, dans lequel le bouchon de verrouillage (300') comprend un rebord (307') s'étendant transversalement à la direction longitudinale (L), ledit rebord (307') comprenant une surface (320') en regard de l'extrémité libre du bouchon de verrouillage (300'), dans lequel la surface (320'), dans un état dans lequel le bouchon de verrouillage (300') a été transféré vers la partie de verrouillage (103'), est configurée pour venir en butée contre une partie de paroi extérieure (107') de la première partie de meuble (100').

11. Utilisation d'un système selon l'une quelconque des revendications 1 à 10 pour relier mutuellement de manière verrouillante des première et seconde parties de meuble (100, 200).
